# EUROPEAN PATENT APPLICATION

(11) **EP 3 163 547 A1**
(43) Date of publication of application: **03.05.2017**
(21) Application number: 14895528.9
(22) Date of filing: 31.10.2014
(51) Int. Cl.: G08B 21/24, G08B 21/18

(54) **ALARM METHOD AND APPARATUS**

(30) Priority: 25.06.2014 CN 201410294519
(71) Applicant: ZTE Corporation, Shenzhen, Guangdong 518057 (CN)
(72) Inventor: REN, Zhongjie, Shenzhen Guangdong 518057 (CN)
(74) Representative: Novagraaf Technologies
(86) International application number: PCT/CN2014/090069
(87) International publication number: WO 2015/196684

(57) **Abstract**

Provided are an alarming method and device. The method includes that: when wireless equipment determines that information, stored in the wireless equipment, of at least one terminal disappears from a connected equipment list, the wireless equipment enters an alert state, wherein the wireless equipment is arranged to access a communication network, terminals access the communication network through the wireless equipment and the connected equipment list records information of all terminals connected to the wireless equipment (S102); and the wireless equipment entering the alert state gives an alarm when a preset condition is met, wherein the preset condition includes that: it is recorded in the connected equipment list that there are still one or more terminals connected with the wireless equipment, and/or, the wireless equipment enters or is in a charging mode (S104). By the method, the problem that Ufi equipment has not yet been applied to a vehicle in the related art is solved, and Ufi equipment is applied to a vehicle and value-added services are provided, thus improving user experiences.

## Description

### Technical Field

The present disclosure relates to the field of communication, and in particular to an alarming method and device.

### Background

At present, wireless equipment, such as Universal Serial Bus Wireless Fidelity (Ufi) which is used as an example for illustration in the subsequent descriptions, has been more and more widely used. A Ufi terminal, in which a wireless access component is added on the basis of a conventional data card, can be used as a modem of an independent Universal Serial Bus (USB) interface, and can also be used as a wireless access router.

A main function of Ufi equipment is to provide a network access channel for users and provide network sharing among the users. Multiple wireless mobile intelligent terminals can share a mobile network at the same time through a Wireless Fidelity (WIFI) hotspot provided by Ufi equipment. However, Ufi equipment can only provide an undiversified function, which makes it easily replaced by intelligent terminals. Therefore, it is a development trend of Ufi products to additionally provide some special features to Ufi equipment to enable the Ufi equipment to provide more services.

Meanwhile, along with gradual increase of vehicle theft cases, vehicle antitheft has become a problem considered by more and more vehicle owners and required to be solved. Although most of current automobiles are equipped with electronic antitheft devices as a standard configuration, vehicle theft cases are still common.

For the problem that Ufi equipment has not yet been applied to a vehicle to provide value-added services in a related art, there is yet no effective solution.

### Summary

The embodiments of the present disclosure provide an alarming method and device, so as to at least solve the problem that Ufi equipment has not yet been applied to a vehicle in a related art.

According to an aspect of the embodiments of the present disclosure, an alarming method is provided, which may include that: when wireless equipment determines that information, stored in the wireless equipment, of at least one terminal disappears from a connected equipment list, the wireless equipment enters an alert state, the wireless equipment is arranged to access a communication network, terminals access the communication network through the wireless equipment, and the connected equipment list records information of all terminals connected to the wireless equipment; and the wireless equipment entering the alert state gives an alarm when a preset condition is met, the preset condition may include that: it is recorded in the connected equipment list that there are still one or more terminals connected with the wireless equipment, and/or, the wireless equipment enters or is in a charging mode.

In an exemplary embodiment, before the wireless equipment determines that the information, stored in the wireless equipment, of the at least one terminal disappears from the connected equipment list, the method may further include that: the wireless equipment scans all the terminals connected to the wireless equipment, and caches information of all the terminals into the connected equipment list; and the wireless equipment stores the information of all the terminals in the connected equipment list into the wireless equipment.

In an exemplary embodiment, the step that the wireless equipment gives an alarm may include at least one of that: the wireless equipment notifies, according to information, pre-stored in the wireless equipment, of at least one piece of equipment, the at least one piece of equipment of information of the one or more terminals currently still connected with the wireless equipment; and the wireless equipment gives an alarm through an alarm arranged on the wireless equipment.

In an exemplary embodiment, the step that the wireless equipment notifies the at least one piece of equipment may include at least one of that: a call is made to at least one communication number of the at least one piece of equipment; and a message is sent to the at least one piece of equipment.

In an exemplary embodiment, the step that the wireless equipment gives an alarm through the alarm arranged on the wireless equipment may include at least one of that: after the wireless equipment makes a call to the at least one communication number of the at least one piece of equipment but does not get successfully connected to any of the at least one communication number, the wireless equipment gives an alarm through the alarm arranged on the wireless equipment; and the wireless equipment receives a call made by or information sent by the at least one piece of equipment corresponding to the pre-stored information of the at least one piece of equipment, and the wireless equipment gives an alarm through the alarm arranged on the wireless equipment.

Furthermore, the condition that the wireless equipment enters or is in the charging mode may include that: the wireless equipment is connected with a vehicle through an interface, and when the vehicle is in a working state, the wireless equipment enters or is in the charging mode.

According to another aspect of the embodiments of the present disclosure, an alarming device is provided, which may be positioned in wireless equipment, the alarming device including: a determination component 22, arranged to, when determining that information, stored in the wireless equipment, of at least one terminal disappears from a connected equipment list, determine that the wireless equipment enters an alert state, the wireless equipment is arranged to access a communication network, terminals access the communication network through the wireless equipment, and the connected equipment list records information of all terminals connected to the wireless equipment; and an alarming component 24, arranged to give an alarm after the wireless equipment enters the alert state under a condition that a preset condition is met, the preset condition may include that: it is recorded in the connected equipment list that there are still one or more terminals connected with the wireless equipment, and/or, the wireless equipment enters or is in a charging mode.

In an exemplary embodiment, the device may further include: a processing component 26, arranged for the wireless equipment to scan all the terminals connected to the wireless equipment, and cache information of all the terminals into the connected equipment list; and a storage component 28, arranged for the wireless equipment to store the information of all the terminals in the connected equipment list into the wireless equipment.

In an exemplary embodiment, the alarming component 24 may include at least one of: a notification unit 32, arranged for the wireless equipment to notify, according to information, pre-stored in the wireless equipment, of at least one piece of equipment, the at least one piece of equipment of information of the one or more terminals currently still connected with the wireless equipment; and a first alarming unit 34, arranged for the wireless equipment to give an alarm through an alarm arranged on the wireless equipment.

In an exemplary embodiment, the notification unit may be arranged to: make a call to at least one communication number of the at least one piece of equipment; and/or send a message to the at least one piece of equipment.

In an exemplary embodiment, the first alarming unit 34 may be arranged to: give an alarm through the alarm arranged on the wireless equipment after the wireless equipment makes a call to the at least one communication number of the at least one piece of equipment but does not get successfully connected to any of the at least one communication number; and/or, give an alarm through the alarm arranged on the wireless equipment when the wireless equipment receives a call made by or information sent by the at least one piece of equipment corresponding to the pre-stored information of the at least one piece of equipment.

In an exemplary embodiment, the device may further include: an interface component 30, arranged to connect the wireless equipment with a vehicle through an interface, and when the vehicle is in a working state, make the wireless equipment enter or be in the charging mode.

According to another aspect of the embodiments of the present disclosure, wireless equipment is provided, which may include: a network access unit 42, arranged to access a communication network; a routing access unit 44, arranged to provide a connection with a terminal, the terminal being connected to the wireless equipment to further access the communication network through the routing access unit 44, information of the terminal may be stored in a connected equipment list after the terminal accesses the routing access unit 44; a storage unit 46, arranged to store the connected equipment list; and an alarming unit 48 and/or notification unit 50, the alarming unit 48 being arranged to give an alarm under a condition that the wireless equipment enters an alert state and a preset condition is met and the notification unit 50 being arranged to notify, according to pre-stored information of at least one piece of equipment, the at least one piece of equipment under the condition that the wireless equipment enters the alert state and the preset condition is met, when the wireless equipment determines that at least one terminal stored in the wireless equipment disappears from the connected equipment list, the wireless equipment enters the alert state; and the preset condition may include that: it is recorded in the connected equipment list that there are still one or more terminals connected with the wireless equipment, and/or, the wireless equipment enters or is in a charging mode.

In an exemplary embodiment, the wireless equipment may further include: an interface 52, arranged to be connected with a vehicle, when the vehicle is in a working state, the wireless equipment enters or is in the charging mode.

According to the embodiments of the present disclosure, when wireless equipment determines that information, stored in the wireless equipment, of at least one terminal disappears from a connected equipment list, the wireless equipment enters an alert state. The wireless equipment is arranged to access the communication network, terminals access the communication network through the wireless equipment, and the connected equipment list records the information of all the terminals connected to the wireless equipment. The wireless equipment entering the alert state gives an alarm under a condition that a preset condition is met. The preset condition may include that: it is recorded in the connected equipment list that there are still one or more terminals connected with the wireless equipment, and/or, the wireless equipment enters or is in the charging mode. The problem that Ufi equipment has not yet been applied to a vehicle in the related art is solved. Ufi equipment is applied to a vehicle to provide value-added services or implement vehicle antitheft, and thus user experiences can be improved.

### Brief Description of the Drawings

The drawings described here are adopted to provide further understanding of the present disclosure, and form a part of the present disclosure. Schematic embodiments of the present disclosure and descriptions thereof are adopted to explain the present disclosure and not intended to form improper limits to the present disclosure. In the drawings:
Fig. 1 is a flowchart of an alarming method according to an embodiment of the present disclosure;
Fig. 2 is a structure block diagram of an alarming device according to an embodiment of the present disclosure;
Fig. 3 is a first structure block diagram of an alarming device according to an embodiment of the present disclosure;
Fig. 4 is a second structure block diagram of an alarming device according to an embodiment of the present disclosure;
Fig. 5 is a third structure block diagram of an alarming device according to an embodiment of the present disclosure;
Fig. 6 is a structure block diagram of wireless equipment according to an embodiment of the present disclosure;
Fig. 7 is a first structure block diagram of wireless equipment according to an embodiment of the present disclosure;
Fig. 8 is a diagram of a basic working manner of Ufi equipment in the related art;
Fig. 9 is a flowchart for Ufi equipment to enter an alert state from a normal state according to an embodiment of the present disclosure;
Fig. 10 is a flowchart of alerting when Ufi equipment judges that a user leaves a part of mobile intelligent terminals in a vehicle according to an embodiment of the present disclosure;
Fig. 11 is a flowchart of alarming when Ufi equipment judges that a vehicle is abnormally started according to an embodiment of the present disclosure; and
Fig. 12 is a working flowchart of recovering Ufi equipment from an alert state to a normal state according to an embodiment of the present disclosure.

### Detailed Description of the Embodiments

The present disclosure will be described below with reference to the drawings and embodiments in detail. It is important to note that the embodiments in the present disclosure and characteristics in the embodiments may be combined under the condition of no conflicts.

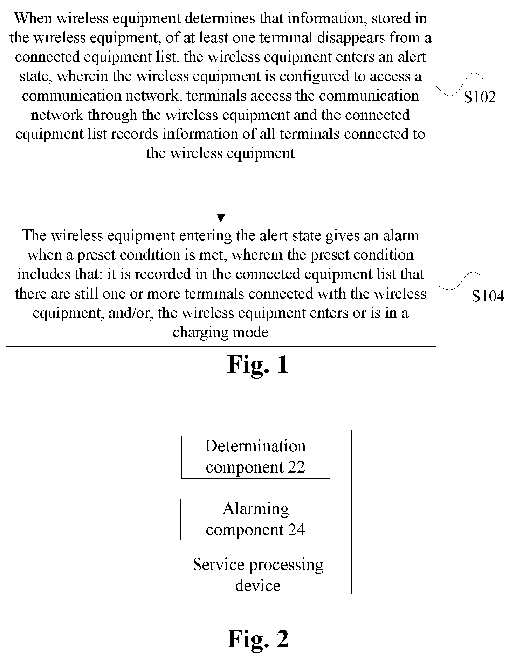

An embodiment provides an alarming method. Fig. 1 is a flowchart of an alarming method according to an embodiment of the present disclosure. As shown in Fig. 1, the flow includes the following steps:
Step S102: when wireless equipment determines that information, stored in the wireless equipment, of at least one terminal disappears from a connected equipment list, the wireless equipment enters an alert state, the wireless equipment is arranged to access a communication network, terminals access the communication network through the wireless equipment, and the connected equipment list records information of all terminals connected to the wireless equipment; and
Step S104: the wireless equipment entering the alert state gives an alarm when a preset condition is met, the preset condition includes that: it is recorded in the connected equipment list that there are still one or more terminals connected with the wireless equipment, and/or, the wireless equipment enters or is in a charging mode.

By the steps, the wireless equipment (for example, Ufi) is connected with a vehicle, and when determining that information, stored in the wireless equipment, of at least one terminal disappears from the connected equipment list, the wireless equipment enters the alert state, and simultaneously gives an alarm under the condition that the preset condition is met, the preset condition includes that: it is recorded in the connected equipment list that there are still one or more terminals connected with the wireless equipment, and/or, the wireless equipment enters or is in the charging mode. The problem that wireless equipment (for example, Ufi) has not yet been applied to a vehicle in the related art is solved. By virtue of the method, Ufi equipment is applied to a vehicle to provide value-added services or implement vehicle antitheft, and thus user experiences can be improved.

Step S102 involves a judgment about that the wireless equipment determines that the information, stored in the wireless equipment, of the at least one terminal disappears from the connected equipment list and the wireless equipment enters the alert state. In an optional embodiment, in order to better determine whether terminals currently connected to the wireless equipment are consistent with terminals which are scanned last time and connected to the wireless equipment or not, before the step that the wireless equipment determines that the information, stored in the wireless equipment, of the at least one terminal disappears from the connected equipment list, the method may further include that: the wireless equipment scans all the terminals connected to the wireless equipment, and caches information of all the terminals into the connected equipment list; and moreover, the wireless equipment stores the information of all the terminals in the connected equipment list into the wireless equipment.

There are multiple manners for a vehicle with wireless equipment (for example, Ufi) to give an alarm about a terminal left in the vehicle or about the vehicle itself. For example, in an optional embodiment, the step that the wireless equipment gives an alarm includes at least one of that: the wireless equipment notifies, according to information, pre-stored in the wireless equipment, of at least one piece of equipment, the at least one piece of equipment of information of the one or more terminals currently still connected with the wireless equipment; and the wireless equipment gives an alarm through an alarm arranged on the wireless equipment. The first alarming manner can prompt a user of a mobile terminal left in the vehicle and prevent occurrence of the situation that the mobile terminal left in the vehicle is thieved. The second alarming manner implements antitheft alarming of the vehicle itself and effectively prevent occurrence of the situation that the vehicle is thieved.

There are also multiple manners for the wireless equipment to notify the equipment. In an optional embodiment, the step that the wireless equipment notifies the at least one piece of equipment includes at least one of that: a call is made to at least one communication number of the at least one piece of equipment; and a message is sent to the at least one piece of equipment. By the manner provided in the embodiment, when the wireless equipment determines that the information, stored in the wireless equipment, of the at least one terminal disappears from the connected equipment list, the wireless equipment may send the information of the one or more terminals currently still connected with the wireless equipment to the at least one piece of equipment pre-stored in the wireless equipment, so as to prompt the user of the situation that one or more mobile terminals are left in the vehicle and avoid the probability that the one or more mobile terminals left in the vehicle are thieved.

There may be multiple necessary conditions set for antitheft alarming of the vehicle itself. In an optional embodiment, the step that the wireless equipment gives an alarm through the alarm arranged on the wireless equipment includes at least one of that: after the wireless equipment makes a call to the at least one communication number of the at least one piece of equipment but does not get successfully connected to any of the at least one communication number, the wireless equipment gives an alarm through the alarm arranged on the wireless equipment; and when the wireless equipment receives a call made by or information sent by the at least one piece of equipment corresponding to the pre-stored information of the at least one piece of equipment, the wireless equipment gives an alarm through the alarm arranged on the wireless equipment. The wireless equipment can give an alarm to prompt the user that the vehicle may be in danger, so that the user can timely take an action to prevent loss of the vehicle.

In an optional embodiment, the condition that the wireless equipment enters or is in the charging mode may include that: the wireless equipment is connected with a vehicle through an interface, and when the vehicle is in a working state, the wireless equipment enters or is in the charging mode.

Another embodiment provides an alarming device, the device is arranged to implement the abovementioned embodiments and preferred implementation modes, and that what has been described will not be elaborated. For example, term "component", used below, may implement a combination of software and/or hardware with a preset function. Although the device described in the following embodiment is preferably implemented with software, implementation with hardware or a combination of software and hardware is also possible and conceivable.

Fig. 2 is a structure block diagram of an alarming device according to an embodiment of the present disclosure. As shown in Fig. 2, the device includes: a determination component 22, arranged to, when determining that information, stored in the wireless equipment, of at least one terminal disappears from a connected equipment list, determine that the wireless equipment enters an alert state, the wireless equipment is arranged to access a communication network, terminals access the communication network through the wireless equipment and the connected equipment list records information of all terminals connected to the wireless equipment; and an alarming component 24, arranged to give an alarm after the wireless equipment enters the alert state under a condition that a preset condition is met, the preset condition includes that: it is recorded in the connected equipment list that there are still one or more terminals connected with the wireless equipment, and/or, the wireless equipment enters or is in a charging mode.

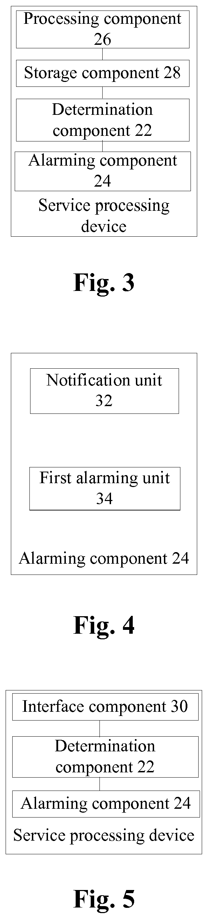

Fig. 3 is a first structure block diagram of an alarming device according to an embodiment of the present disclosure. As shown in Fig. 3, the device further includes: a processing component 26, arranged for the wireless equipment to scan all the terminals connected to the wireless equipment, and cache information of all the terminals into the connected equipment list; and a storage component 28, arranged for the wireless equipment to store the information of all the terminals in the connected equipment list into the wireless equipment.

Fig. 4 is a second structure block diagram of an alarming device according to an embodiment of the present disclosure. As shown in Fig. 4, the alarming component 24 includes at least one of: a notification unit 32, arranged for the wireless equipment to notify, according to information, pre-stored in the wireless equipment, of at least one piece of equipment, the at least one piece of equipment of information of the one or more terminals currently still connected with the wireless equipment; and a first alarming unit 34, arranged for the wireless equipment to give an alarm through an alarm arranged on the wireless equipment.

In an optional embodiment, the notification unit is arranged to: make a call to at least one communication number of the at least one piece of equipment; and/or, send a message to the at least one piece of equipment.

In an optional embodiment, the first alarming unit 34 is arranged to: give an alarm through the alarm arranged on the wireless equipment after the wireless equipment makes a call to the at least one communication number of the at least one piece of equipment but does not get successfully connected to any of the at least one communication number; and/or, give an alarm through the alarm arranged on the wireless equipment when the wireless equipment receives a call made by or information sent by the at least one piece of equipment corresponding to the pre-stored information of the at least one piece of equipment.

Fig. 5 is a third structure block diagram of an alarming device according to an embodiment of the present disclosure. As shown in Fig. 5, the device further includes: an interface component 30, arranged to connect the wireless equipment with a vehicle through an interface, and when the vehicle is in a working state, make the wireless equipment enter or be in the charging mode.

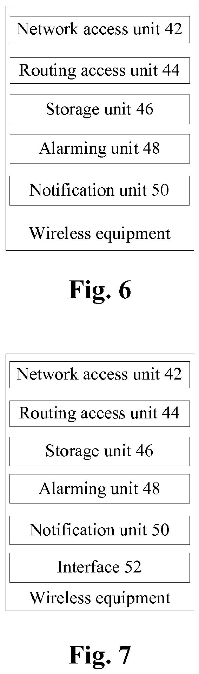

Fig. 6 is a structure block diagram of wireless equipment according to an embodiment of the present disclosure. As shown in Fig. 6, the wireless equipment includes: a network access unit 42, arranged to access a communication network; a routing access unit 44, arranged to provide a connection with a terminal, the terminal being connected to the wireless equipment to further access the communication network through the routing access unit 44, information of the terminal is stored in a connected equipment list after the terminal accesses the routing access unit 44; a storage unit 46, arranged to store the connected equipment list; and an alarming unit 48 and/or notification unit 50, the alarming unit 48 being arranged to give an alarm under a condition that the wireless equipment enters an alert state and a preset condition is met and the notification unit 50 being arranged to notify, according to pre-stored information of at least one piece of equipment, the at least one piece of equipment under the condition that the wireless equipment enters the alert state and the preset condition is met, when the wireless equipment determines that at least one terminal stored in the wireless equipment disappears from the connected equipment list, the wireless equipment enters the alert state; and the preset condition includes that: it is recorded in the connected equipment list that there are still one or more terminals connected with the wireless equipment, and/or, the wireless equipment enters or is in a charging mode.

Fig. 7 is a first structure block diagram of wireless equipment according to an embodiment of the present disclosure. As shown in Fig. 7, the wireless equipment further includes: an interface 52, arranged to be connected with a vehicle, when the vehicle is in a working state, the wireless equipment enters or is in the charging mode.

An exemplary embodiment will be described below with reference to the drawings.

In order to realize a function of equipment, the exemplary embodiment may be implemented by the following technical solution.

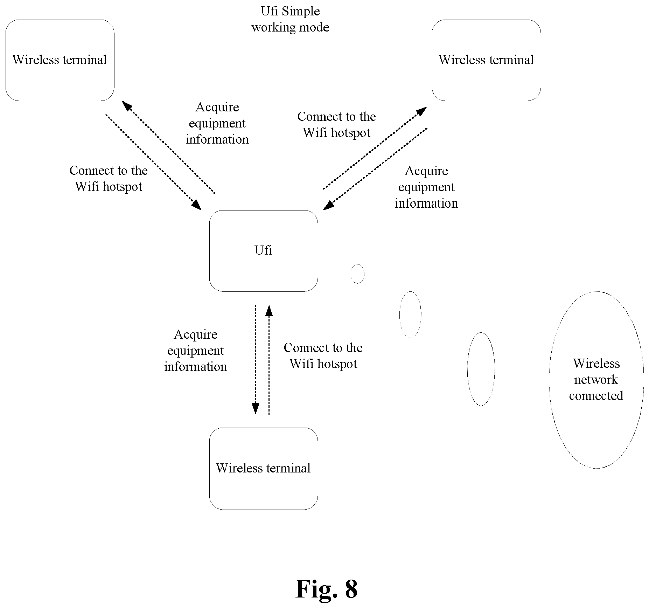

Fig. 8 is a diagram of a basic working manner of Ufi equipment in the related art. In the exemplary embodiment, conventional Ufi equipment is additionally provided with an information storage component capable of storing one or more telephone numbers of a vehicle owner and a Media Access Control (MAC) address of mobile equipment, and is provided with a built-in or external alarming loudspeaker.
1: The user may connect multiple wireless mobile intelligent terminals to a WIFI hotspot provided by the Ufi equipment, and the Ufi equipment may detect and cache all terminal equipment connected to the WIFI hotspot in its WIFI hotspot area into a connected equipment list.
2: The user may store multiple telephone numbers into the information storage component of the Ufi equipment, and may store information of multiple pieces of equipment in the connected equipment list into the information storage component; and on the contrary, the user may also delete related information stored in the information storage component.
3: The Ufi equipment is connected to a power supply of a vehicle, and when an engine is stopped and power is cut off, the Ufi equipment enters an autonomous battery power supply mode; and when being powered by the power supply of the vehicle, the Ufi equipment enters a charging mode.
4: When information of some equipment in the information storage component disappears from the connected equipment list, the Ufi equipment enters an alert state.
5: When the Ufi equipment is in the alert state and information of a part of equipment in the information storage component is still in the connected equipment list, the Ufi equipment traverses the one or more telephone numbers stored in the information storage component, and sequentially sends a short message, a content of the short message is the information of the equipment still stored in the connected equipment list.
6: When the Ufi equipment enters or is in the charging mode and the Ufi equipment is in the alert state, the Ufi equipment traverses the one or more telephone numbers stored in the information storage component, and sequentially makes a call to the one or more telephone numbers; and if the wireless equipment cannot get connected to any of the one or more telephone numbers, the Ufi equipment starts the alarming loudspeaker provided thereon.
7: The user can make a call, from any of the telephone numbers in the information storage component, to a number of a Subscriber Identity Module (SIM) card inserted into the Ufi equipment to trigger the alarming loudspeaker.
8: When the information of all the equipment in the information storage component appears in the connected equipment list, the Ufi equipment is recovered into a normal state.

By the exemplary embodiment, the conventional Ufi equipment can be endowed with a vehicle-mounted antitheft function, and a vehicle antitheft function can be better realized by utilizing the function features of a data card product in combination with the electronic antitheft devices of the vehicle.

According to the exemplary embodiment, the Ufi equipment with the vehicle-mounted antitheft function is provided by adding an information storage component to the conventional Ufi equipment to store the information of the wireless mobile intelligent terminal equipment information and one or more telephone numbers of the user, and by adding a built-in or external loudspeaker to produce alarming sounds in combination with a wireless access function of the conventional Ufi equipment and short message and call functions of a conventional data card.

First, the user stores one or more telephone numbers in the information storage component of the Ufi equipment, stores information of one or more pieces of equipment in the connected equipment list into the information storage component, and connects the Ufi equipment to the power supply of the vehicle and place the Ufi equipment in a hidden place in the vehicle.

When information of some equipment in the information storage component disappears from the connected equipment list, the Ufi equipment enters an alert state. At this moment, if information of a part of equipment in the information storage component is still in the connected equipment list, the Ufi equipment traverses the one or more telephone numbers stored in the information storage component, and sequentially sends a short message, of which the content is the information of the equipment still in the connected equipment list, to prompt the user of the mobile intelligent equipment which may be left in the vehicle.

When the Ufi equipment is in the alert state, if the Ufi equipment enters or is in the charging mode, it represents that the vehicle is in a working state, and the Ufi equipment traverses the one or more telephone numbers stored in the information storage component, and sequentially makes a call to the one or more telephone numbers to prompt the user that the vehicle may be operated by another person. If the Ufi equipment cannot get connected to any of the one or more telephone numbers, the Ufi equipment starts the alarming loudspeaker to attract attentions of people around the vehicle.

When the information of all the equipment in the information storage component appears in the connected equipment list, it represents that the user is in the vehicle or in the vicinity of the vehicle, and the Ufi equipment is recovered into the normal state.

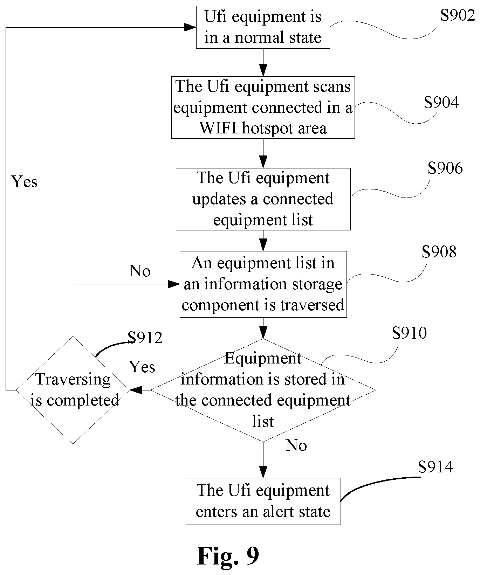

Fig. 9 is a flowchart for Ufi equipment to enter an alert state from a normal state according to an embodiment of the present disclosure. As shown in Fig. 9, the flow specifically includes the following steps:
Step S902: Ufi equipment is in a normal state;
Step S904: the Ufi equipment scans all terminal equipment connected to a WIFI in its WIFI hotspot area;
Step S906: the Ufi equipment updates a connected equipment list;
Step S908: the Ufi equipment traverses equipment list information in an information storage component;
Step S910: the Ufi equipment judges whether currently traversed equipment information is in the connected equipment list or not;
Step S912: if the currently traversed equipment information is in the connected equipment list, whether the traversing is completed or not is judged, Step S902 is executed to keep the normal state and wait for next scanning if the traversing is completed, and if the traversing is not completed, Step S904 is executed to continue traversing; and
Step S914: if the currently traversed equipment information is not in the connected equipment list, the Ufi equipment enters an alert state.

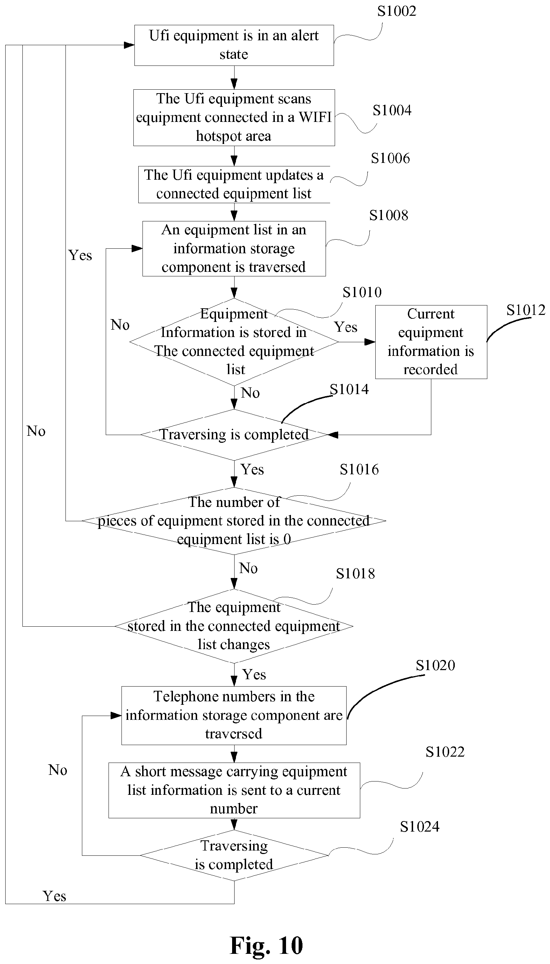

Fig. 10 is a flowchart of alerting when Ufi equipment judges that a user leaves a part of mobile intelligent terminals in a vehicle according to an embodiment of the present disclosure. As shown in Fig. 10, the flow specifically includes the following steps:
Step S1002: Ufi equipment is in an alert state;
Step S1004: the Ufi equipment scans all terminal equipment connected to a WIFI in its WIFI hotspot area;
Step S1006: the Ufi equipment updates a connected equipment list;
Step S1008: the Ufi equipment traverses equipment list information in an information storage component;
Step S1010: the Ufi equipment judges whether currently traversed equipment information is in the connected equipment list or not;
Step S1012: when the currently traversed equipment information is in the connected equipment list, the current equipment information is recorded;
Step S1014: if the currently traversed equipment is not in the connected equipment list, whether the traversing is completed or not is judged, and if the traversing is not completed, Step S1008 is executed to continue traversing;
Step S1016: if the traversing is completed, whether the number of recorded equipment is 0 or not, and if the number of the equipment is 0, Step S1002 is executed to keep the alert state;
Step S1018: if the number of the equipment recorded this time is not 0, whether equipment information recorded this time is the same as equipment information recorded in last scanning or not is judged, and if the information recorded this time is the same as the information recorded last time, Step S1002 is executed to keep the alert state;
Step S1020: if the equipment information recorded this time is different from the information recorded last time, a telephone number list stored in the information storage component is traversed;
Step S1022: a short message is sent to a currently traversed number, a content of the short message being the current equipment information in the information list stored in the connected equipment list; and
Step S1024: whether traversing is completed or not is judged, Step S1002 is executed to keep the alert state if the traversing is completed, and if the traversing is not completed, Step S1020 is executed to continue traversing.

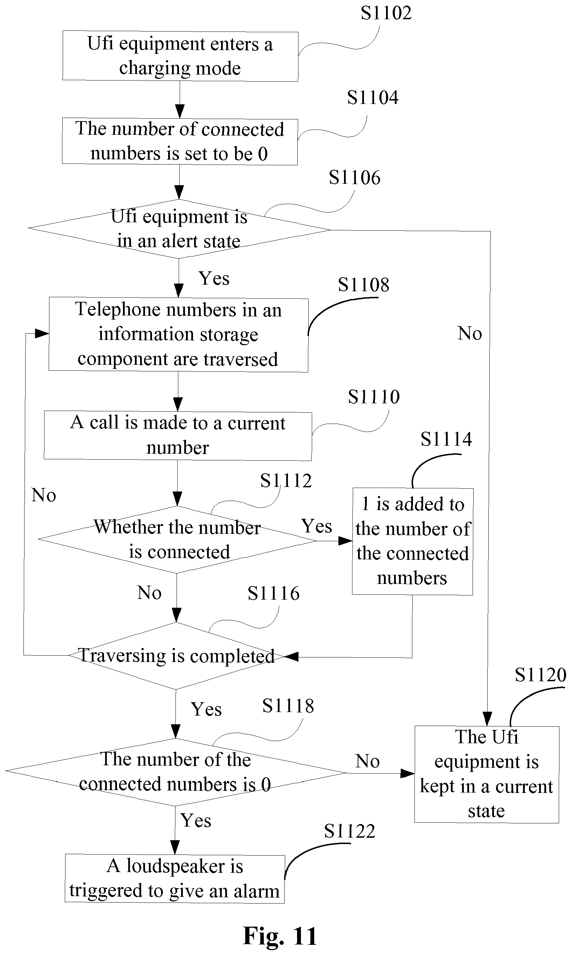

Fig. 11 is a flowchart of alarming when Ufi equipment judges that a vehicle is abnormally started according to an embodiment of the present disclosure. As shown in Fig. 11, the flow specifically includes the following steps:
Step S1102: Ufi equipment enters a charging mode;
Step S1104: the number of currently connected telephone numbers is set to be 0;
Step S1106: whether the Ufi equipment is in an alert state or not is judged;
Step S1108: if the Ufi equipment is in the alert state, a telephone number list stored in an information storage component is traversed;
Step S1110: a call is made to a currently traversed telephone number;
Step S1112: the Ufi equipment judges whether the current number is connected or not;
Step S1114: if the current number is connected, 1 is added to the number of the currently connected telephone numbers;
Step S1116: if connection to the current number fails, whether the traversing is completed or not is judged, and if the traversing is not completed, Step S1108 is executed to continue traversing;
Step S1118: if the traversing is completed, whether the number of the currently connected telephone numbers is 0 or not is judged;
Step S1120: if the number of the currently connected telephone numbers is not 0, the Ufi equipment stores a current state; and
Step S1122: if the number of the currently connected telephone numbers is 0, the loudspeaker is triggered to give an alarm.

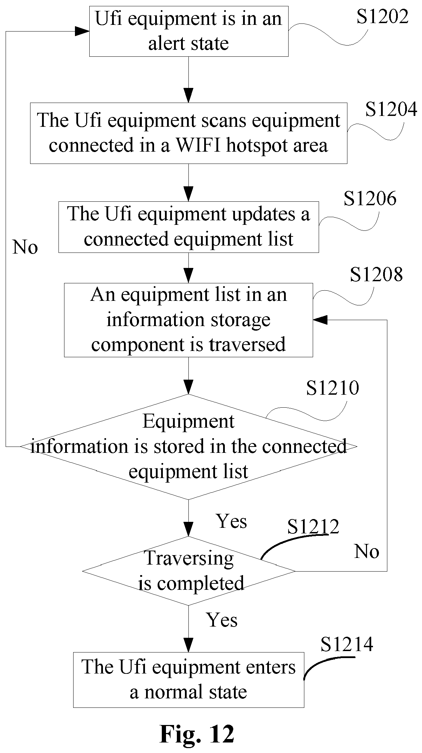

Fig. 12 is a working flowchart of recovering Ufi equipment from an alert state to a normal state according to an embodiment of the present disclosure. As shown in Fig. 12, the flow specifically includes the following steps:
Step S1202: Ufi equipment is in an alert state;
Step S1204: the Ufi equipment scans all terminal equipment connected to a WIFI in its WIFI hotspot area;
Step S1206: the Ufi equipment updates a connected equipment list;
Step S1208: the Ufi equipment traverses equipment list information in an information storage component;
Step S1210: the Ufi equipment judges whether currently traversed equipment information is in the connected equipment list or not, and if the currently traversed equipment information is not in the connected equipment list, returns to Step S1202 to keep the alert state;
Step S1212: if the currently traversed equipment information is in the connected equipment list, whether the traversing is completed or not is judged, and if the traversing is not completed, Step S1208 is executed to continue traversing; and
Step S1214: if the traversing is completed, the Ufi equipment enters a normal state.

For the problem in the related art, with reference to the embodiments, by using the function of Ufi equipment capable of providing a WIFI hotspot for a wireless mobile intelligent terminal to connect, existing functions of the Ufi equipment are extended in the embodiments, and the function features of a data card product are utilized to provide an implementation method for novel vehicle-mounted antitheft Ufi equipment, thereby providing novel Ufi equipment with an intelligent vehicle-mounted antitheft function.

Obviously, those skilled in the art should know that each component or each step of the present disclosure may be implemented by a universal computing device, and the components or steps may be concentrated on a single computing device or distributed on a network formed by a plurality of computing devices, and may optionally be implemented by program codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the present disclosure is not limited to any specific hardware and software combination.

The above is only the preferred embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection defined by the appended claims of the present disclosure.

### Industrial Applicability

The present disclosure relates to the field of communication, the wireless equipment determines that the information, stored in the wireless equipment, of the at least one terminal disappears from the connected equipment list, the wireless equipment enters the alert state, the wireless equipment is arranged to access the communication network, terminals access the communication network through the wireless equipment, and the connected equipment list records the information of all the terminals connected to the wireless equipment; and the wireless equipment entering the alert state gives an alarm under the condition that the preset condition is met, the preset condition includes that: it is recorded in the connected equipment list that there are still one or more terminals connected with the wireless equipment, and/or, the wireless equipment enters or is in the charging mode. The problem that Ufi equipment has not yet been applied to a vehicle in the related art is solved, Ufi equipment is applied to a vehicle to provide value-added services or implement vehicle antitheft, and thus user experiences can be improved.

## Claims

1. An alarming method, comprising:
when wireless equipment determines that information, stored in the wireless equipment, of at least one terminal disappears from a connected equipment list, the wireless equipment entering an alert state, wherein the wireless equipment is arranged to access a communication network, terminals access the communication network through the wireless equipment, and the connected equipment list records information of all terminals connected to the wireless equipment; and
giving, by the wireless equipment entering the alert state, an alarm when a preset condition is met, wherein the preset condition comprises that: it is recorded in the connected equipment list that there are still one or more terminals connected with the wireless equipment, and/or, the wireless equipment enters or is in a charging mode.

2. The method as claimed in claim 1, before the wireless equipment determines that the information, stored in the wireless equipment, of the at least one terminal disappears from the connected equipment list, the method further comprising:
scanning, by the wireless equipment, all the terminals connected to the wireless equipment, and caching, by the wireless equipment, information of all the terminals into the connected equipment list; and
storing, by the wireless equipment, the information of all the terminals in the connected equipment list into the wireless equipment.

3. The method as claimed in claim 1, wherein giving, by the wireless equipment, the alarm comprises at least one of:
notifying, by the wireless equipment according to information, pre-stored in the wireless equipment, of at least one piece of equipment, the at least one piece of equipment of information of the one or more terminals currently still connected with the wireless equipment; and
giving, by the wireless equipment, an alarm through an alarm arranged on the wireless equipment.

4. The method as claimed in claim 3, wherein notifying the at least one piece of equipment comprises at least one of that:
making a call to at least one communication number of the at least one piece of equipment; and
sending a message to the at least one piece of equipment.

5. The method as claimed in claim 4, wherein giving, by the wireless equipment, the alarm through the alarm arranged on the wireless equipment comprises at least one of:
after the wireless equipment makes a call to the at least one communication number of the at least one piece of equipment but does not get successfully connected to any of the at least one communication number, giving, by the wireless equipment, the alarm through the alarm arranged on the wireless equipment; and
when the wireless equipment receives a call made by or information sent by the at least one piece of equipment corresponding to the pre-stored information of the at least one piece of equipment, giving, by the wireless equipment, the alarm through the alarm arranged on the wireless equipment.

6. The method as claimed in any one of claims 1 to 5, wherein a condition that the wireless equipment enters or is in the charging mode comprises that:
the wireless equipment is connected with a vehicle through an interface, and when the vehicle is in a working state, the wireless equipment enters or is in the charging mode.

7. An alarming device, positioned in wireless equipment, the alarming device comprising:
a determination component, arranged to, when determining that information, stored in the wireless equipment, of at least one terminal disappears from a connected equipment list, determine that the wireless equipment enters an alert state, wherein the wireless equipment is arranged to access a communication network, terminals access the communication network through the wireless equipment, and the connected equipment list records information of all terminals connected to the wireless equipment; and
an alarming component, arranged to give an alarm after the wireless equipment enters the alert state under a condition that a preset condition is met, wherein the preset condition comprises that: it is recorded in the connected equipment list that there are still one or more terminals connected with the wireless equipment, and/or, the wireless equipment enters or is in a charging mode.

8. The device as claimed in claim 7, further comprising:
a processing component, arranged for the wireless equipment to scan all the terminals connected to the wireless equipment, and cache information of all the terminals into the connected equipment list; and
a storage component, arranged for the wireless equipment to store the information of all the terminals in the connected equipment list into the wireless equipment.

9. The device as claimed in claim 7, wherein the alarming component comprises at least one of:
a notification unit, arranged for the wireless equipment to notify, according to information, pre-stored in the wireless equipment, of at least one piece of equipment, the at least one piece of equipment of information of the one or more terminals currently still connected with the wireless equipment; and
a first alarming unit, arranged for the wireless equipment to give an alarm through an alarm arranged on the wireless equipment.

10. The device as claimed in claim 9, wherein the notification unit is arranged to:
make a call to at least one communication number of the at least one piece of equipment; and/or,
send a message to the at least one piece of equipment.

11. The device as claimed in claim 10, wherein the first alarming unit is arranged to:
give the alarm through the alarm arranged on the wireless equipment after the wireless equipment makes a call to the at least one communication number of the at least one piece of equipment but does not get successfully connected to any of the at least one communication number; and/or,
give the alarm through the alarm arranged on the wireless equipment when the wireless equipment receives a call made by or information sent by the at least one piece of equipment corresponding to the pre-stored information of the at least one piece of equipment.

12. The device as claimed in any one of claims 7 to 11, further comprising:
an interface component, arranged to connect the wireless equipment with a vehicle through an interface, and when the vehicle is in a working state, make the wireless equipment enter or be in the charging mode.

13. Wireless equipment, comprising:
a network access unit, arranged to access a communication network;
a routing access unit, arranged to provide a connection with a terminal, the terminal being connected to the wireless equipment to further access the communication network through the routing access unit, wherein information of the terminal is stored in a connected equipment list after the terminal accesses the routing access unit;
a storage unit, arranged to store the connected equipment list; and
an alarming unit and/or notification unit, the alarming unit being arranged to give an alarm under a condition that the wireless equipment enters an alert state and a preset condition is met and the notification unit being arranged to notify, according to pre-stored information of at least one piece of equipment, the at least one piece of equipment under the condition that the wireless equipment enters the alert state and the preset condition is met, wherein when the wireless equipment determines that at least one terminal stored in the wireless equipment disappears from the connected equipment list, the wireless equipment enters the alert state; and the preset condition comprises that: it is recorded in the connected equipment list that there are still one or more terminals connected with the wireless equipment, and/or, the wireless equipment enters or is in a charging mode.

14. The wireless equipment as claimed in claim 13, further comprising:
an interface, arranged to be connected with a vehicle, wherein when the vehicle is in a working state, the wireless equipment enters or is in the charging mode.
